# EUROPEAN PATENT APPLICATION

(11) **EP 4 194 419 A1**
(43) Date of publication of application: **14.06.2023**
(21) Application number: 21290081.5
(22) Date of filing: 08.12.2021
(51) Int. Cl.: C04B 18/02, C04B 28/02, C04B 103/14

(54) **METHOD FOR INCREASING THE STRENGTH OF A HYDRAULIC BINDER AND A MINERAL ACCELERATOR THEREFORE**

(71) Applicant: Holcim Technology Ltd, 5113 Holderbank (CH)
(72) Inventor: Broyer, Véronique, 69800 Saint-Priest (FR); Faure, Jean-Michel, 69600 Oullins (FR); Rinaldi, David, 69003 Lyon (FR)
(74) Representative: HGF

(57) **Abstract**

The invention relates to a Method for accelerating the development of the strength of a hydraulic binder composition wherein CSH-seeds are added to a cementitious mixture to be accelerated, characterized in that solid shaped particles comprising hydrated cement or a dry powder comprising hydrated cement is mixed with a dry or aqueous concrete or mortar mixture to accelerate the hardening of the concrete or mortar by providing CSH seeds.

## Description

The Invention relates to a method for increasing the strength of a hydraulic binder composition, a mineral accelerator therefore and a method for the manufacturing of the accelerator.

It is known, that calcium silicate hydrates (CSH) seeds when added to a Portland cement paste may have an accelerating effect.

From cement and concrete research 2020, "Hydration of Portland cement accelerated by CSH seeds at different temperatures", Hermann Camillo Petrosa, O.A.M. Reales, it is known that CSH seeds have a potential application as accelerators in oil-well cementing pastes. Typical oil-well conditions present elevated temperatures; nevertheless, it is not clear how such temperatures affect the nucleation process used by these seeds. In this article G-class cement pastes were blended with up to 5 % of CSH seeds and cured at 25, 40 and 60°C. Hydration kinetics results show that the nucleation effect from CSH seeds accelerated the hydration reaction by decreasing the apparent activation energy of pastes.

From Construction and Building Materials, vol. 264, December 2020, "Calcium-Silicate-Hydrates seeds as an accelerator for saving energy in cold weather concreting", Ge Zhang, Yingzi Yang, it is known that cold weather concreting is well known for its high energy consumption in machines because it needs to take various measurements to prevent the frost damage of concrete. Effectively, promoting the strength of concrete developed rapidly in cold weather is a crucial way to solve this problem. This document relates to the addition of chloride-free and green calcium silicate hydrate (CSH) seeds and the performance of Portland cement at negative temperatures. The results show that the strength of PC adjusted by CSH seeds developed rapidly at negative temperatures (-5°C) during 28 days after several hours of precuring.

The company B.A.S.F developed and commercialized such an accelerator on a liquid CSHseeds base called X-seed^{®} 100, used especially for the production of pre-casted concrete products. X-seed^{®} 100 is a suspension of a CSH seeds in water, which appears to be obtained from the process disclosed in WO 2010/026155 A1.

From Boyuan Wang, Wu Yao, Dietmar Stephan, "Preparation of calcium silicate hydrate seeds by means of mechanic-chemical method and its effect on the early hydration of cement", Advances In mechanical engineering April 2, 2019, it is known to mix a Portland cement with a calculated amount of a pre-mixed water/CSH dispersion and sand to produce a mortar.

WO 2010/026155 A1 discloses a process for the preparation of a hardening accelerator composition by reaction of a water-soluble calcium compound with a water soluble silicate compound and a process for the preparation of a hardening acceleration composition by reaction of a calcium compound and a silicon dioxide containing compound under alkaline conditions, wherein the reaction between the water soluble compounds is carried out in the presence of an aqueous solution which contains a water soluble comb-polymer suitable as a plasticizer for hydraulic binders.

US 2019/0263720 A1 relates to a process for the production of a composition suitable as an accelerator for the curing of a cement made from a cementitious component, a dispersant and water and is used as a liquid preparation.

Recently, CSH seeds were used for different applications but still a broad application of CSH seeds hasn't been established.

It is an object of the present invention to provide a method for accelerating the development of the strength of a hydraulic binder which can be easily applied.

The object is met by way of a method according to claim 1.

It is a further object of the present invention to provide for an accelerator for hydraulic binders which can be easily applied.

This object is met by way of the mineral accelerator of claim 10.

It is a further object of the invention to provide a method for manufacturing the mineral accelerator.

This object is met by way of a method for manufacturing the mineral binder according to claim 18.

Further embodiments are claimed in the respective dependent claims.

According to the invention a mineral accelerator is manufactured in a solid state and can easily be added at various process stages to mineral binders and especially mineral binders based on cementitious materials that hydrate by forming at least partially calcium silicate hydrates (CSH). However, given the nature of the accelerator obtained from the process as claimed, the particles contain between 30 and 70% water by weight, this water being either chemically or physically bound to the solid parts of the accelerator. In any case, the accelerator appears to be dry when handled.

In a further embodiment of the invention the solid mineral accelerator is manufactured in the form of granules, small aggregated particles or extruded particles or particles with a predetermined shape. Further, the particles have a hardness or compressive strength which is low enough that they can be stored, handled and processed and while being mixed into the binder, mortar or concrete composition any agglomerates of the particles break up into fine particles.

Therefore, the mineral accelerator can be added at any process stage in the production of a mortar or concrete; including to a ready mixed dry mortar or concrete; or to a mortar or concrete slurry after the process (hydration) water has been added; or to a concrete before the concrete is filled into a concrete truck or a concrete pump.

In case the mineral accelerator is added to a pre-mixed dry mortar it may be added as the last component under slight mixing, it can as well be added to a mortar or concrete package as a separate package to be added by the end user. In this case, the mineral accelerator is comprised of granules that have size comprised between 0.5 mm and 5.0 mm, preferentially between 0.5 mm and 2.0 mm.

The method for the production or manufacturing of the mineral accelerator comprises the preparation of a cement slurry which comprises a cement, a dispersing agent such as a superplasticizer and water.

The cement slurry is allowed to harden by the hydration of the cement for a predetermined duration. This way, a mineral accelerator is obtained which is mostly composed of cement hydrates, such as calcium silicate hydrate particles and ettringite particles. When added to a cement mortar or concrete composition, the strength increases, and in particular during the early stages of the hardening process.

The cement is preferably a Portland cement, without any further hydraulic binders present. The cement is a cement of the type CEM I according to the Standard NF EN197-1 of April 2012.

Other suitable cements which may be used in the invention are cements of the type CEM II, CEM III, CEM IV or CEM V, according to the Standard NF EN197-1 of April 2012, or to a mixture of a CEM I with one or several of any constituent defined in the same standard. Constituents that contain higher amounts of silica are however preferred in the present invention, such as silica fume, fly ash or colloidal silica, or calcined clay.

The superplasticizer according to the invention comprises polycarboxylates as a main constituent of the dry content of the superplasticizer. Preferably, the polycarboxylates are present in an amount of at least 80 wt.-% of the dry content. More preferred are superplasticizers that do not comprise any hydrolysable side chains.

According to the invention the water cement ratio of the cement slurry is between 0.5 and 4, preferably between 1 and 3. Accordingly, the water cement weight ratio is significantly higher in comparison to a standard cement. The purpose of this higher water cement weight ratio according to the invention is to provide a sufficient amount of water which allows reaction of all the binder required to produce the accelerator, and also a sufficient amount of water available for the formation of the hydrates in the accelerator. Further, the high-water cement ratio of the present invention provides a mineral accelerator which has a sufficient hardness to be processed and handled but at the same time is brittle enough that it can easily break up into smaller particles during the mixing of the concrete or mortar composition, either as a dry composition or composition with water.

This predetermined degree of hardness is advantageous for the invention as it increases the efficiency of the acceleration process.

As already pointed out the method of the present invention may further comprise an additional step which comprises shaping the particles into any desired shape during the hardening process. Suitable particles can for example be obtained by any known pelletizing or granulation process. Small particles may for example be achieved by extrusion and cutting to a desired length.

Process admixtures for optimizing the pelletizing, granulation or extruding process may be added. These admixtures may influence the viscosity, the surface characteristics, the aggregation capability and other properties of the paste or the initial particles.

The admixtures may be any adjuvants which are typically used in pelletizing processes, granulation processes or extruding processes, for example water spray, thickeners, dispersants, silica fume or colloidal silica or other mineral powders of a suitable grain size and the like.

According to the invention it is advantageous if the mixing of the mineral accelerator with water takes place with either limited or no exchange with ambient air within a preferably sealed reactor.

In general, according to the method for the manufacture of the accelerator according to the invention a dispersing agent is dispersed into water in a given reactor with limited exchange with ambient air to avoid carbonization.

After the homogenization of the dispersing agents the cement is added. After adding the cement, the reactor is sealed and a homogenization step is carried out. For example, in one step the cement is mixed into the water and afterwards homogenized by agitating, for example with a mixer or any other suitable means.

According to the invention the homogenous liquid mixture comprises at least water, cementitious material and dispersing agent; and is, kept under continuous agitation to avoid segregation of the particles of the cementitious material after homogenization. The higher the water cement weight ratio is, the longer the agitation time needs to be. Agitation is performed for 1 hour to 8 days, preferably for 6 hours to 4 days, more preferably 1 day to 4 days.

According to the invention instead of using a liquid accelerator slurry such as X-seed^{®} 100, the mixture is processed in such a way that the homogeneous liquid mixture solidifies as hydration occurs due to the initial composition of the homogeneous liquid mixture. After solidification a homogenous material is achieved with a uniform distribution of fully hydrated cement phases.

After a sufficient time, the final solid material is ground or crushed to a predetermined fineness/particle size. According to the invention this has to be achieved in a way which does not heat up the material unnecessarily to avoid thermal or mechanical decomposition or deterioration of the cement hydrates.

To avoid drying and/or carbonation of the yielded accelerator it is stored in a sealed container until it is used. Alternatively the accelerator can be coated by an agent that reduces the drying and/or carbonation.

For the agitation of the liquid mixture any suitable mixing device is suitable. It has to be noted, that as the dispersing agent a superplasticizer is used at least with 10 wt.-% in relation to the cement.

In another embodiment the dispersing agent is dispersed in water in a reactor and then homogenized. After the homogenization of the dispersing agent the cementitious material is added. The reactor is resealed, and the mixture is thoroughly and evenly mixed.

In yet another embodiment, the cement and water are homogenized in a reactor under sealed conditions to avoid carbonation, and the dispersing agent is added in a separate step afterwards.

The homogeneous mixture is kept under continuous agitation to avoid the segregation of the cementitious material particles.

Due to the initial composition of the homogenous liquid mixture the consistency of the homogenous liquid mixture will become more and more viscous agitation is stopped once a desired viscosity, before example paste-like viscosity, is achieved. This paste-like viscosity is preferred as it prevents segregation of the mixture, and the formation of layer of water on the top of the slurry.

This paste can be adjusted in viscosity by means of any known thickener or plasticizer but in particular by mineral powders or other very fine mineral powders not excluding cementitious materials.

This paste can be extruded and cut into small pieces qf for example cylindric shape or the paste can be pelletized by means of known pelletizing machines wherein the pelletizing can be achieved with the help of pelletizing agents or further very fine mineral powders with a fineness which is comparable with the fineness of a common cement powder as mentioned above.

The final product is stored in a sealed container prior to use to avoid drying and/or carbonation. Again, the hardness of these formed particles is adjusted such that these particles after adding to a solid or liquid mixture break up and disperse as very fine particles within the mixture.

The invention in particular pertains in a first aspect to a method for accelerating the development of the strength of a hydraulic binder composition wherein CSH-seeds are added to a cementitious mixture to be accelerated, characterized in that dry solid shaped particles comprising hydrated cement is mixed with a dry or aqueous concrete or mortar mixture to accelerate the hardening of the concrete or mortar by providing CSH crystallization seeds.

In an embodiment the accelerator is added in form of pellets, granules, extruded and cut particles, powder with a given particle size and/or particle size distribution, wherein the hardness of the particles is in a range allowing the breaking up into fine articles while mixing into the dry or aqueous mixture to be accelerated.

In an embodiment the hardness of the particles is in a range of 10 N to 300 N, measured by using a Mecmesin Shotcrete Penetrometer.

In an embodiment the shaped particles are added in form of pellets, granules or extruded and cut particles.

In an embodiment the shaped particles have a size between 1 mm and 10 mm.

In an embodiment the particles contain between 30 and 70% water by weight, this water being either chemically or physically bound to the solid parts of the accelerator.

In an embodiment the accelerator is added to a dry cement, concrete or mortar mixture in way that prevents the particles, granules, pellets or formed particles to break up before or during the mixing of the dry mixture with water.

In an embodiment the accelerator is added to a liquid mixture and in particular an aqueous mixture of a mortar or concrete and homogenized in that mixture to provide for a breaking up of the particles, granules, pellets or formed particles and the fine dispersion of the accelerator in the mixture.

In an embodiment the accelerator is added to an aqueous mixture in a mixing device for mortar or concrete like a concrete transport truck or concrete pump.

Another aspect of the invention relates to an Accelerator for hydraulic binders in particular cementitious mortars or concretes wherein the accelerator consist of solid hydrated cement particles, pellets, granules or formed particles.

In an embodiment the cement particles are made from one or more from the group consisting of CEM I, CEM II, CEM III, CEM IV or CEM V according to the Standard NF EN197-1 of April 2012, or to a mixture of a CEM I with one or several of any constituent defined in the same standard.

In an embodiment the accelerator is comprising a superplasticizer based on polycarboxylates as a main constituent of the dry content of the superplasticizer.

In an embodiment the polycarboxylates are present in an amount of at least 80 wt.-% of the dry content of the superplasticizer.

In an embodiment the superplasticizer does not contain any hydrolysable site chain.

In an embodiment the water content of the particles is below 5% wt-%, preferably below 2 wt-% and more preferably below 0,25 wt-% of Water which is not physically or chemically bound as a hydrate in relation to the total weight of the particle.

In an embodiment the accelerator at least comprises cement hydrates, such as calcium silicate hydrate and sulfo-aluminate hydrates.

Another aspect of the invention relates to a method for manufacturing of a mineral accelerator for hydraulic binders in particular cementitious mortars or concretes wherein the method comprises the preparation of a cement slurry which comprises a cement, a superplasticizer and water and wherein the slurry is allowed to harden under agitation so that the product is a solid dry material and wherein the slurry is allowed to harden under agitation so that the product is a solid dry material or a paste which afterwards is processed into shaped particles which are cured and dried afterwards.

In an embodiment a dispersing agent is dispersed into water in a given reactor, wherein after the homogenization of the dispersing agent the cement is added and after adding of the cement, the reactor is sealed and a homogenization follows.

In an embodiment as a dispersing agent a superplasticizer is used and in particular a superplasticizer based on polycarboxylates as a main constituent of the dry content of the superplasticizer.

In an embodiment as a cement, a cement from one or more from the group consisting of CEMI, CEM II, CEM III, CEM IV or CEM V according to the Standard NF EN197-1 of April 2012 is used, or to a mixture of a CEM I with one or several of any constituent defined in the same standard.

In an embodiment the cement is mixed and homogenized within the water and the dispersing agent by mixing, wherein after a comparable strong mixing the homogenized liquid mixture is kept under smooth agitation to avoid segregation of the cement particles.

In an embodiment the liquid mixture is agitated for 1 hour to 8 days, preferably 6 hours to 4 days and more preferred 1 day to 4 days, wherein a higher water cement ratio requires the longer agitation time until the homogenous liquid mixture solidifies as hydration occurs.

In an embodiment the final material is removed from the reactor and afterwards ground, milled or crushed to a predetermined fineness, wherein the fine material may be sieved to obtain a certain determined particle distribution.

In an embodiment the viscosity of the composition in the reactor is monitored before the overall hardening of the smooth agitated homogeneous liquid mixture, wherein when the viscosity of homogeneous liquid mixture increases to a paste-like viscosity, a shaping process follows which allows to obtain particles.

In an embodiment as a shaping method extrusion is used in which the paste is introduced into an extruder, pressed out of the extruder die and cut into fine particles, for instance fine cylinder-shaped particles.

In an embodiment, after shaping, the particles are allowed to dry further, cure and hydrate, so that no excess water is present wherein the shaped particles are kept away from ambient air to avoid carbonation.

In an embodiment the particles are cured and dried until the water content of the particles is below 5% wt-%, preferably below 2 wt.-% and more preferred below 0,25 wt.-% of Water which is not physically or chemically bound in relation to the total weight of the particle.

The invention is further explained by examples. The examples are shown in accompanying drawings which show:
- Figure 1:: A first table with the constituents and properties pertaining to size range of some examples of the mineral accelerator according to the invention;
- Figure 2:: A Table showing an example of the constituents for the shaping of the mineral accelerator;

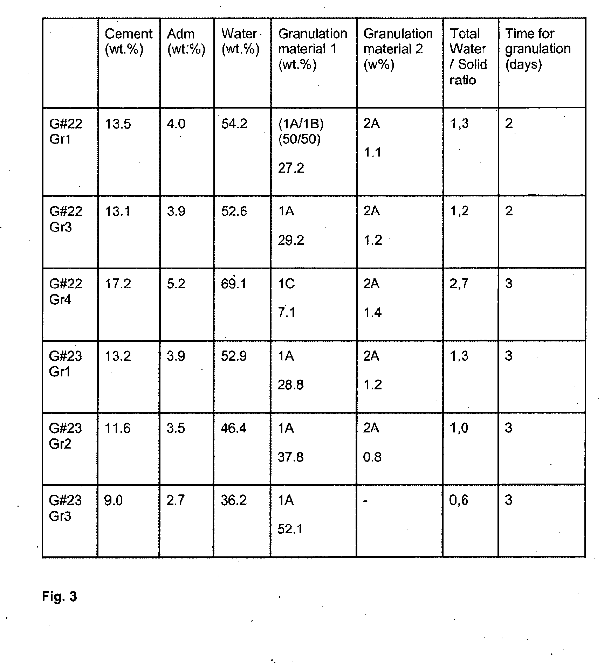

- Figure 3:: A Table showing the composition of different mineral admixtures for a granulation with additional granulation materials;

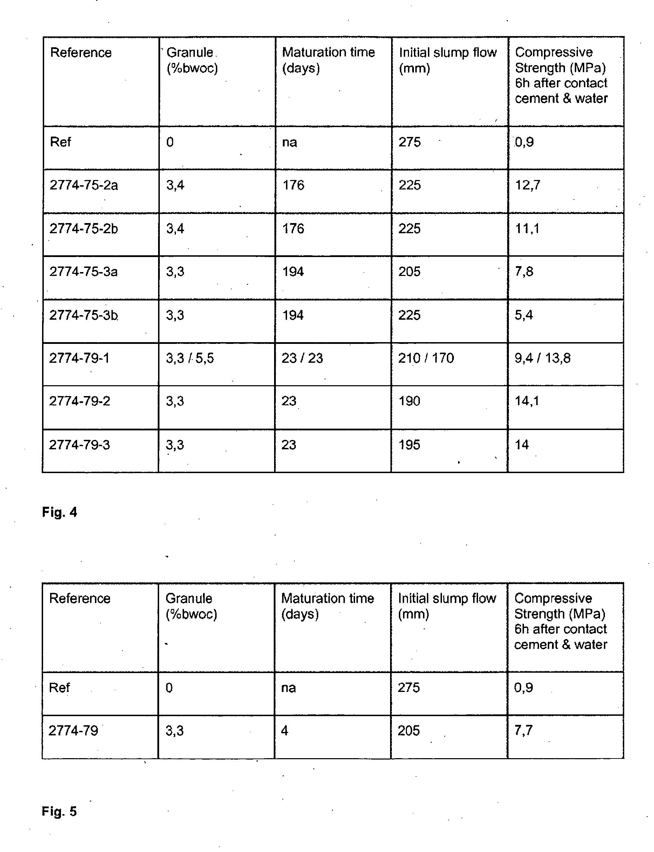

- Figure 4:: A Table showing the performance of the particles with crushing and sieving;
- Figure 5:: A Table showing the performance of the material of the shaping by extrusion;

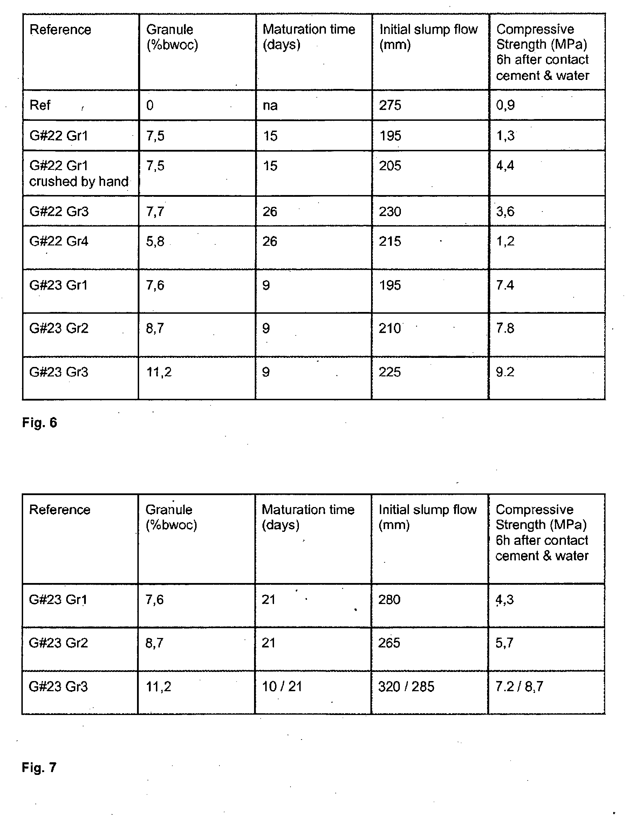

- Figure 6:: A Table showing the performance of respective granules;
- Figure 7:: A Table showing the performance with an additional superplasticizer.

In a first embodiment a mineral accelerator is produced wherein the final product contains fine particles which are achieved by crushing and sieving.

For the purpose of the production a dispersing agent, i.e., a superplasticizer, preferably a plasticizer based on polycarboxylates is dispersed in water in a reactor and homogenized in that reactor. After the homogenization of the dispersing agent in the water, cement or cementitious material is added.

The reactor is closed afterwards again and the cement is mixed and homogenized within the water and the dispersing agent by mixing. After a comparable strong mixing, the homogenized homogeneous liquid mixture is kept under smooth agitation to avoid segregation of the cement particles.

In particular, the liquid mixture is agitated 1 hour to 8 days, preferably 6 hours to 4 days and more preferred 1 day to 4 days,, wherein a higher water cement weight ratio requires the longer agitation time. Due to the initial components and composition of the homogenous mixture, the homogeneous liquid mixture solidifies as hydration occurs. The final material is removed from the reactor and afterwards ground, milled or crushed to an acceptable fineness, wherein the fine material may be sieved to obtain a certain determined particle size distribution.

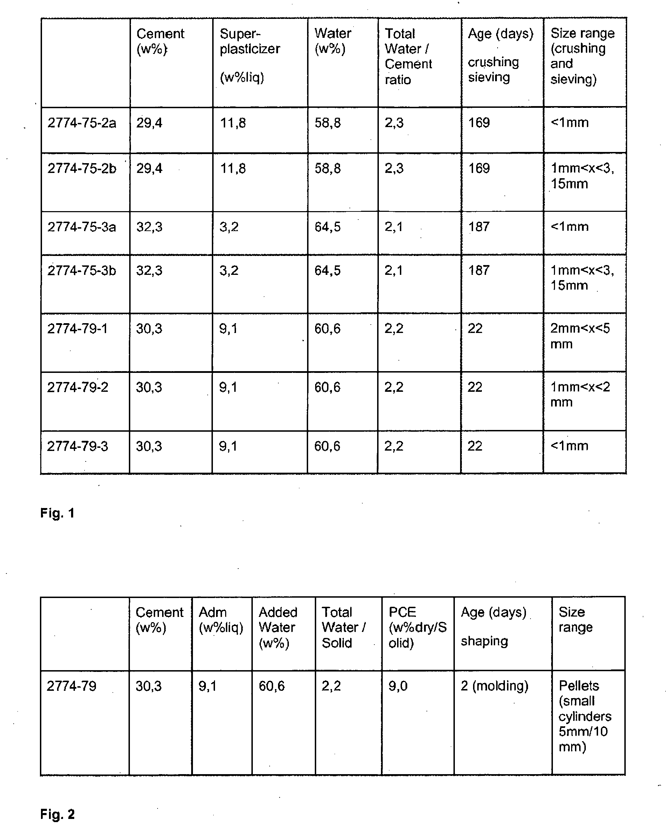

The fine material is stored in a sealed container prior to use to avoid drying or carbonation. Alternatively the accelerator can be coated with an agent that reduces the drying or carbonation. With a dispersing agent, such as polycarboxylates and a CEM I 52, 5R, the samples of the setting are homogenous. No phase separation occurred and no excess free water can be seen on the top of the sample. Figure 1 shows a table which discloses the weight percentage of cement, the weight percentage of the superplasticizer and water and the resulting water cement weight ratio. Further, the curing time before crushing and sieving is mentioned as well as the particle size range after crushing and sieving.

In a further embodiment of the invention the viscosity of the composition in the reactor is monitored before the overall hardening of the smooth agitated homogeneous liquid mixture.

When the viscosity of the homogeneous liquid mixture increases to a paste-like viscosity, a shaping process follows which allows to obtain particles.

The desired viscosity depends on the following forming process.

As one shaping method, for example, extrusion is possible, in which the paste is introduced into an extruder, pressed out of the extruder die and cut into fine particles, for instance fine cylinder-shaped particles. After shaping, these particles are allowed to dry further, cure and hydrate, so that no excess water remains. The shaped particles are then kept away from ambient air to avoid further drying and carbonization. The ready cured particles are then packed.

In table 2 an example is mentioned with a cement content of around 30 wt.-%, 9 wt. % of superplasticizer and 6,6 wt.-% of water, so that the total water solid weight ratio is 2.2, after two days small cylinders of 5mm (diameter) and 10 mm (length) are extruded.

In still a further embodiment of the invention, instead of forming small particles by extruding, the particles are manufactured from the paste-like homogeneous mixture by granulation, wherein any known granulation adjuvants may be used. Preferably fine mineral powders may be used, for example calcined clay, silica fume, cementitious materials and other known materials for that purpose.

In table 3 examples for the granulated material are mentioned wherein the time for the granulation was 2 to 3 days.

For the testing of the strength mortar test specimens were produced wherein the mortar had the following composition:
531 g cement, 1350 g of normalized sand and water to a cement ratio of 0,4.

The specimens for the mechanical strength were casted in polystyrene molds with a size of 4 x 4 x 16 cm. At the beginning of the production the hydrated accelerator in dry form was added to the sand at the beginning of the mixing procedure.

In table 4 the achieved compressive strength after the crushing and sieving process is mentioned. As it can be derived from that table the compressive strength in MPa at 6 hours after the contact of the cement with water was between 0.9 for the reference material with no accelerator granules and between 7.8 and 14.1 in mortars were the granules according to the invention had been added. It is remarkable that a high maturation time of the granules lead to lower compressive strength in comparison to shorter maturation times of about 3 weeks.

In table 5 a further embodiment is disclosed comprising 3.3 wt.-% of the shaped granules which increase the compressive strength remarkably from 0.9 of the reference which does not comprise any granules to 7.7.

In table 5 the effect of adding different amounts of granules is shown, wherein through a slightly higher curing time and a slightly higher content of shaped granules in comparison to a reference, a remarkable increase of the compressive strength is achieved.

In a further example which is mentioned in table 6 a further amount of polycarboxylate was added to the ready mixed mortar, which lowered the viscosity (initial slump flow) and led to almost the same compressive strength.

The inventors have found that it is advantageous not to use liquid accelerators as these liquid accelerators are not easy to store and may decompose or change their properties. Solid accelerators with a comparable low compressive strength are ideal for storage and mixing with a cementitious material, mortar or concrete. The tests show that the acceleration is remarkable, wherein the accelerator is easy to handle and to use.

## Claims

1. Method for accelerating the development of the strength of a hydraulic binder composition wherein CSH-seeds are added to a cementitious mixture to be accelerated, **characterized in that** solid shaped particles comprising hydrated cement or a dry powder comprising hydrated cement is mixed with a dry or aqueous concrete or mortar mixture to accelerate the hardening of the concrete or mortar by providing CSH seeds.

2. Method according to claim 1, **characterized in that** the accelerator is added in form of pellets, granules, extruded and cut particles, powder with a given particle size and/or particle size distribution, wherein the hardness of the particles is in a range allowing the breaking up into fine articles while mixing into the dry or aqueous mixture to be accelerated.

3. Method according to claim 1 or 2, **characterized in that** the hardness of the particles is an a range of 10 N to 300 N.

4. Method according to one of the preceding claims, **characterized in that** the shaped particles are added in the form of pellets, granules or extruded and cut particles.

5. Method according to one of the preceding claims, **characterized in that** the shaped particles have a size between 1mm and 10mm.

6. Method according to one of the preceding claims, **characterized in that** the particles contain between 30 and 70% water by weight, this water being either chemically or physically bound to the solid parts of the accelerator.

7. Method according to one of the preceding claims, **characterized in that** the accelerator is added to a dry cement, concrete or mortar mixture in way that prevents the particles, granules, pellets or formed particles to break up before or during the mixing of the dry mixture with water.

8. Method according to one of the preceding claims, **characterized in that** the accelerator is added to a liquid mixture and in particular an aqueous mixture of a mortar or concrete and homogenized **in that** mixture to provide for a breaking up of the particles, granules, pellets or formed particles and the fine dispersion of the accelerator in the mixture.

9. Method according to one of the preceding claims, **characterized in that** the accelerator is added to an aqueous mixture in a mixing device for mortar or concrete like a concrete transport truck or concrete pump.

10. Accelerator for hydraulic binders in particular cementitious mortars or concretes
wherein the accelerator consist of solid hydrated cement particles, pellets, granules or formed particles.

11. Accelerator according to claim 10, **characterized in that** the cement particles are made from one or more from the group consisting of CEM I, CEM II, CEM III, CEM IV or CEM V according to the Standard NF EN197-1 of April 2012, or to a mixture of a CEM I with one or several of any constituent defined in the same standard.

12. Accelerator according to one of the claims 10 or 11, **characterized in that** the accelerator is comprising a superplasticizer based on polycarboxylates as a main constituent of the dry content of the superplasticizer.

13. Accelerator according to one of the claims 10 to 12, wherein the polycarboxylates are present in an amount of at least 80 wt.-% of the dry content of the superplasticizer.

14. Accelerator according to one of the claims 10 to 13, wherein the superplasticizer does not contain any hydrolysable site chain.

15. Accelerator according to one of the claims 10 to 14, **characterized in that** the water content of the particles is below 5% wt.-%, preferably below 2 wt.-% and more preferred below 0,25 wt-% of Water which is not physically or chemically bound as a hydrate in relation to the total weight of the particle.

16. Accelerator according to one of the claims 10 to 15, **characterized in that** the accelerator at least comprises cement hydrates, such as calcium silicate hydrate particles and sulfo-aluminate hydrates.

17. Method for manufacturing of a mineral accelerator for hydraulic binders in particular cementitious mortars or concretes wherein the method comprises the preparation of a cement slurry which comprises a cement, a superplasticizer and water and wherein the slurry is allowed to harden under agitation so that the product is a solid dry material or a paste which afterwards is processed into shaped particles which are cured and dried afterwards.

18. Method according to claim 17, **characterized in that** a dispersing agent is dispersed into water in a given reactor, wherein after the homogenization of the dispersing agent the cement is added and after adding of the cement, the reactor is sealed and a homogenization follows.

19. Method according to claim 17 or 18, **characterized in that** as a dispersing agent a superplasticizer is used and.in particular a superplasticizer based on polycarboxylates as a main constituent of the dry content of the superplasticizer.

20. Method according to one of the claims 17 to 19, **characterized in that** the cement is selected from one or more from the group consisting of CEM I, CEM II, CEM III, CEM IV or CEM V according to the Standard NF EN197-1 of April 2012 is used, or to a mixture of a CEM I with one or several of any constituent defined in the same standard.

21. Method according to one of the claims 17 to 20, **characterized in that** the cement is mixed and homogenized within the water and the dispersing agent by mixing, wherein after a comparable strong mixing the homogenized liquid mixture is kept under smooth agitation to avoid segregation of the cement particles.

22. Method according to one of the claims 17 to 21, **characterized in that** the liquid mixture is agitated for 1 hour to 8 days, preferably 6 hours to 4 days and more preferred 1 day to 4 days, wherein higher water cement ratio requires the longer agitation time until the homogeneous liquid mixture solidifies as hydration occurs.

23. Method according to one of the claims 17 to 22, **characterized in that** the final material is removed from the reactor and afterwards ground, milled or crushed to an acceptable fineness, wherein the fine material may be sieved to obtain a certain determined particle distribution.

24. Method according to one of the claims 17 to 22, **characterized in that** the viscosity of the composition in the reactor is monitored before the overall hardening of the smooth agitated homogenous liquid mixture, wherein when the viscosity of homogeneous liquid mixture increases to a paste-like viscosity, a shaping process follows which allows to obtain particles.

25. Method according to claim 24, **characterized in that** as a shaping method extrusion is used in which the paste is introduced into an extruder, pressed out of the extruder die and cut into fine particles for instance fine cylinder-shaped particles.

26. Method according to claim 24 or 25, **characterized in that** after the shaping the particles are allowed to dry further, cure and hydrate, so that no excess water is existing Wherein the shaped particles are kept away from ambient air to avoid carbonation.

27. Method according to one of the claims 17 to 26, **characterized in that** the particles are cured and dried until the water content of the particles is below 5.0% wt.-%, preferably below 2.0 wt.-% and more preferred below 0.25 wt.-% of water which is not physically or chemically bound as a hydrate in relation to the total weight of the particle.
